# EUROPÄISCHE PATENTSCHRIFT

(11) **EP 2 067 672 B1**
(45) Veröffentlichungstag und Bekanntmachung des Hinweises auf die Patenterteilung: **02.01.2013**
(21) Anmeldenummer: 08105581.6
(22) Anmeldetag: 15.10.2008
(51) Int. Cl.: B60S 1/04

(54) **Scheibenwischvorrichtung für ein Kraftfahrzeug**
Windscreen wiper device for a motor vehicle
Dispositif d'essuie-glace pour un véhicule automobile

(30) Priorität: 06.12.2007 DE 102007058537
(43) Veröffentlichungstag der Anmeldung: 10.06.2009
(73) Patentinhaber: Robert Bosch GmbH, 70442 Stuttgart (DE)
(72) Erfinder: Bauer, Guenter, 76571, Gaggenau (DE); Benner, Andreas, 77830, Buehlertal (DE); Dietrich, Jan, 77815, Buehl (DE); Kraus, Achim, 77815, Buehl (DE)

(56) Entgegenhaltungen:
- EP-A2- 1 862 361
- WO-A1-2008/071515
- DE-A1- 19 855 741
- DE-A1-102006 022 382
- FR-A1- 2 783 477

## Beschreibung

Die Erfindung betrifft eine Scheibenwischvorrichtung für ein Kraftfahrzeug mit mindestens einem Platinenrohr zur Aufnahme einer Antriebseinheit der Scheibenwischervorrichtung.

### Stand der Technik

Scheibenwischvorrichtungen in Kraftfahrzeugen werden derzeit überwiegend als kompakte Baugruppe gefertigt, wobei das Wischerlager und die Antriebseinheit für die Scheibenwischvorrichtung fest miteinander verbunden sind. Diese Art der Verbindung zeigt gegenüber den sogenannten "Loose-Link" Scheibenwischvorrichtungen, bei denen die Wischerlager und die Antriebseinheit nicht zueinander fixiert sind, erhebliche Vorteile hinsichtlich Fertigungstoleranzen und Einbau ins Fahrzeug. Nach dem Stand der Technik wird die Antriebseinheit üblicherweise beispielsweise mittels einer Gussplatine, einem mit dem Platinenrohr verklemmten oder verschweißten Motorhalter oder auch durch eine direkte Verschraubung der Antriebseinheit mit dem Platinenrohr realisiert. Dabei ist unter einem Platinenrohr ein in der Regel rohrförmiges Halteelement zu verstehen, das der Aufnahme der zu der Scheibenwischvorrichtung gehörigen Baugruppen, wie beispielsweise Antriebseinheit, Hebel und Wischerlager, dient und das seinerseits an einem Karosserieteil des Fahrzeugs befestigt wird. Ein Beispiel für eine derartige Lösung findet sich in der deutschen Offenlegungsschrift DE 103 29 568 A1.

Die DE 198 55 741 A1 beschreibt eine Wischeranlage mit einem Wischermotor und einem den Wischermotor haltenden Montagerohr, das hülsenförmig ausgebildet ist. Der Wischermotor ist an wenigstens einer Stellte am Montagerohr fixiert. Das Montagerohr weist an der Montagestellte an einer ersten Seite einen als Durchzug ausgebildeten Durchbruch auf.

Die DE 10 2006 022 382 A1 beschreibt eine Vorrichtung zur Befestigung eines Wischermotors an ein Wischergestänge mit einem rohrförmigen Träger und einem Halter, der an einem Gehäuse des Wischermotors ausgebildet ist und mindestens eine Vertiefung zur Aufnahme mindestens eines Befestigungselementes umfasst. Dabei weist der rohrförmige Träger mindestens eine Aussparung auf, die komplementär zu der mindestens einen Vertiefung in dem Halter ausgebildet ist. Außerdem ist die mindestens eine Vertiefung in mindestens einem Befestigungsdom ausgebildet, auf den der rohrförmige Träger im Bereich seiner Aussparung derart vorpositionierend auf den Halter aufschiebbar ist, dass der rohrförmige Träger und der Wischermotor durch Einsetzen der Befestigungselemente aneinander fixierbar sind.

Den bekannten Lösungen nach dem Stand der Technik ist jedoch der Nachteil gemeinsam, dass die Montage der Antriebseinheit an das Platinenrohr einerseits aufwändig ist und andererseits eine Mehrzahl von Einzelteilen erfordert.

### Vorteile der Erfindung

Dadurch, dass das Platinenrohr der erfindungsgemäßen Scheibenwischvorrichtung mindestens abschnittsweise in der Weise ausgebildet ist, dass die Antriebseinheit mittels einer Klemmverbindung unmittelbar mit dem Platinenrohr verbunden werden kann, lässt sich ein einfacher, leicht überwachbarer Fertigungsprozess der Scheibenwischvorrichtung realisieren. Insbesondere wird die Einhaltung der notwendigen Toleranzen der Scheibenwischvorrichtung vereinfacht und die Bauteilzahl aufgrund des Wegfalls eines separaten Halters für die Antriebseinheit wird reduziert.

Dadurch, dass das Platinenrohr mindestens abschnittsweise als Profil mit zwei Schenkeln ausgebildet ist und die Antriebseinheit mindestens einen Vorsprung aufweist, der zwischen den Schenkeln des Winkelprofils einklemmbar ist, wird eine einfache Zentrierung und Positionierung der Antriebseinheit gegenüber dem Platinenrohr erreicht.

Hierzu kann das Platinenrohr insbesondere mindestens abschnittsweise als U-Profil mit einem definierten Öffnungswinkel ausgebildet sein und der mindestens eine Vorsprung der Antriebseinheit kann als Dom mit einem definierten Kegelwinkel ausgebildet sein, wobei der Kegelwinkel des Doms größer ist als der Öffnungswinkel des U-Profils. Hierdurch wird eine verbesserte Positionierung und Klemmung der Antriebseinheit in dem Platinenrohr ermöglicht.

Die Anordnung von Positionierstiften an der Antriebseinheit zur relativen Positionierung der Antriebseinheit zu dem Platinenrohr mittels Bohrungen in dem Platinenrohr hat den Vorteil, dass die Positionierung von Antriebseinheit und Platinenrohr weiter verbessert und die Montage vereinfacht werden kann.

Vorteilhaft ist es dabei, wenn der Dom ein Gewinde aufweist, in dem das Platinenrohr beispielsweise unter Verwendung von sogenannten Gewindefurchschrauben befestigt werden kann. Die Positionierstifte sind bevorzugt in der Nähe der Dome angeordnet, beispielsweise an der Antriebseinheit angegossen; somit wird eine Positionierung in zwei Raumrichtungen möglich.

Die Komplexität der Herstellung der Antriebseinheit kann des weiteren dadurch verringert werden, dass die Vorsprünge bzw. die Positionierstifte an der Antriebseinheit in einer Entformungsrichtung der Antriebseinheit angeordnet sind; hierdurch wird der Werkzeugbau beispielsweise für einen Aluminiumdruckguss oder für einen Kunststoffspritzguss wesentlich vereinfacht.

Eine Vereinfachung der Anordnung kann auch dadurch erreicht werden, dass die Positionierstifte selbst in die Bohrungen des Platinenrohrs geklemmt werden. Selbstverständlich kann zusätzlich eine Klemmung zwischen den Schenkelns des Profils und dem Dom realisiert sein.

Besonders vorteilhaft ist es, wenn die Vorsprünge bzw. die Positionierstifte an einem Getriebegehäuse der Antriebseinheit angeordnet sind.

### Ausführungsbeispiel

Nachfolgend werden Ausführungsbeispiele anhand der beiliegenden Zeichnung näher erläutert.

### Kurzbeschreibung der Zeichnung

Im Einzelnen zeigen:
- Figur 1: eine perspektivische Ansicht einer bekannten Scheibenwischvorrichtung;
- Figur 2: in den Teilfiguren 2a bis 2c verschiedene Möglichkeiten zur Ausbildung der Klemmverbindung zwischen der Antriebseinheit mit dem Platinenrohr.

### Beschreibung von Ausführungsbeispielen

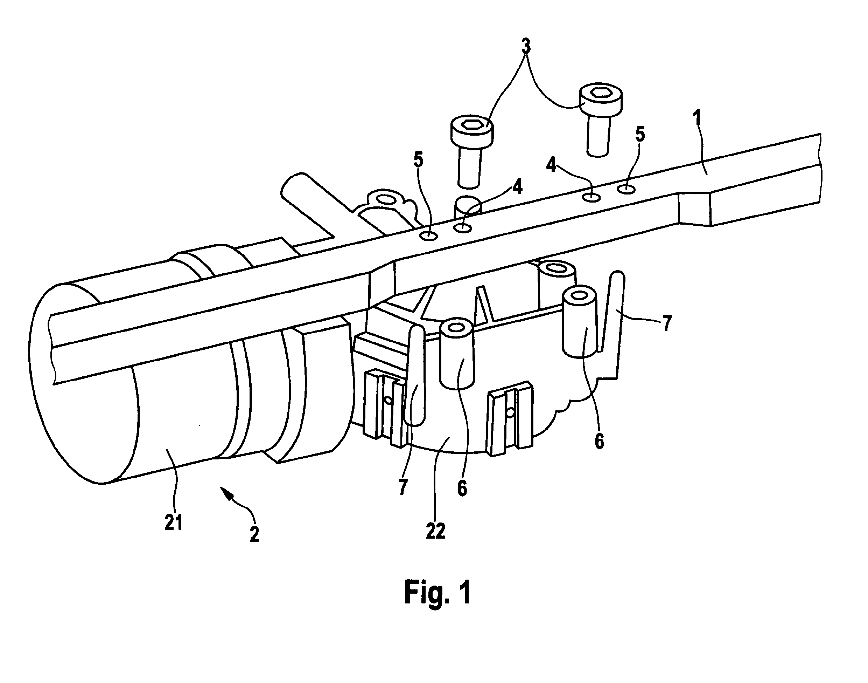

Figur 1 zeigt ein perspektivische Ansicht des Montageprinzips. Dabei ist das Platinenrohr 1 in dem Abschnitt, an dem die Antriebseinheit 2, die im Wesentlichen aus dem Motor 21 und dem Getriebegehäuse 22 besteht, befestigt werden soll, als U-förmiges Profil ausgebildet. In das U-Profil greifen die am Getriebegehäuse 22 angeordneten Positionierstifte 7 in die Löcher 5 ein und positionieren so die Antriebseinheit 2 gegenüber dem Platinenrohr 1. Ebenso greifen die ebenfalls an dem Getriebegehäuse 22 angeordneten Dome 6 zwischen die Schenkel des U-Profils ein und werden mittels der Schrauben 3 über die Gewinde 8 mit dem Platinenrohr 1 verschraubt. Eine oder mehrere der Bohrungen 4 bzw. 5 können dabei, um die Montage zu vereinfachen, als Langloch ausgebildet sein. Aus Figur 1 ist darüber hinaus erkennbar, dass die Dome 6 und die Positionierstifte 7 als Vorsprünge in einer Entformungsrichtung des Getriebegehäuses 22 angeordnet sind.

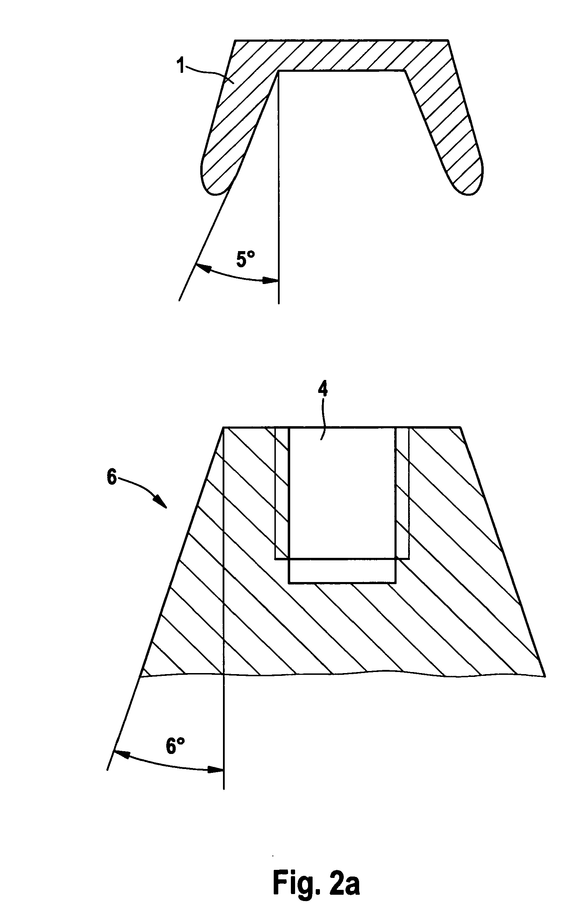

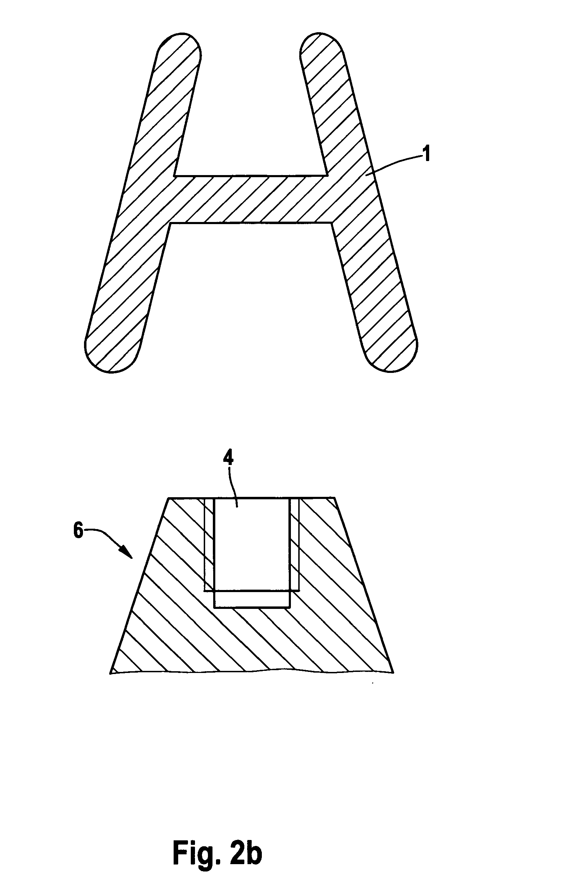

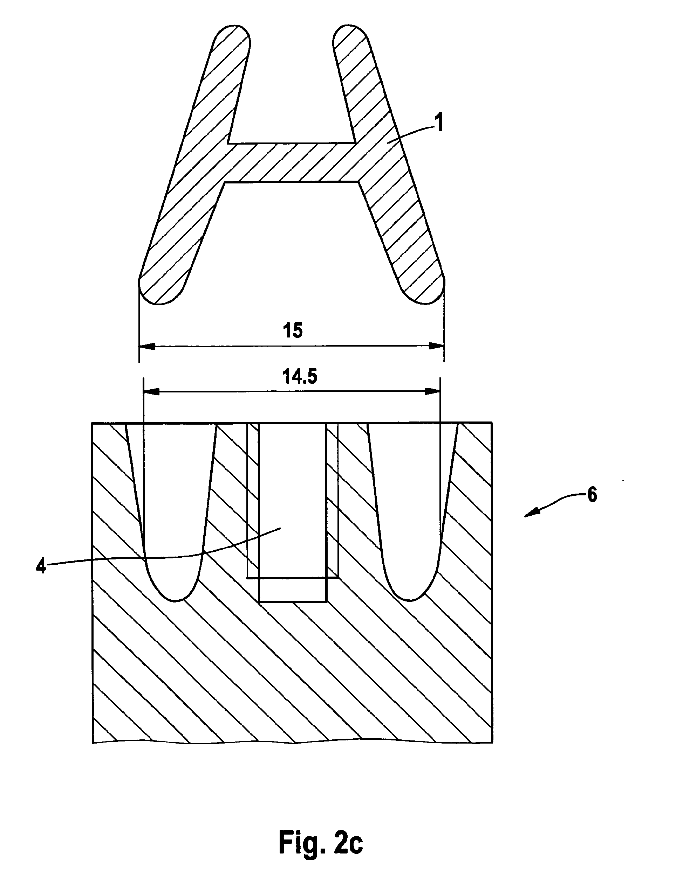

Figur 2 zeigt in den Teilfiguren a, b und c verschiedene Varianten der Klemmverbindung.

Figur 2a zeigt als erste und einfachste nicht beanspruchte Ausfiihrungsform, dass der für die Klemmverbindung verwendete Abschnitt des Platinenrohrs 1 als U-Profil in einem Schenkelwinkel von ca. 5° ausgebildet ist. In dieses U-Profil greift der Dom 6 ein, der einen Kegelwinkel von ca. 6° aufweist, wodurch die Zentrierung des Doms 6 in dem U-Profil des Platinenrohrs 1 vereinfacht wird. Ebenfalls dargestellt ist in Figur 2a das Gewinde 4, über das unter Verwendung einer nicht dargestellten Schraube das Platinenrohr 1 an dem Dom 6 festgezogen werden kann.

Figur 2b zeigt die erfindungsgemäße Klemmvorrichtung, bei welcher der für die Klemmverbindung verwendete Abschnitt des Platinenrohrs 1 als H-Profil ausgebildet ist; der Dom 6 unterscheidet sich dabei nicht wesentlich von der in Figur 2a dargestellten Variante.

Figur 2c zeigt ebenfalls einen als H-Profil ausgebildeten Abschnitt des Platinenrohrs 1, wobei jedoch der korrespondierende Bereich an der Antriebseinheit abweichend von den in Figur 2a und 2b gezeigten Varianten realisiert ist. Die beiden unteren Schenkel des H-Profils zeigen dabei ein Außenmaß von ca. 15 mm. Im Unterschied zu den in Figur 2a und 2b gezeigten Varianten wird der für die Klemmverbindung verwendete Abschnitt des Platinenrohrs 1 nicht auf der Innenseite der Schenkel, sondern auf deren Außenseite geklemmt. Dies wird, wie in Figur 2c dargestellt, dadurch erreicht, dass der für die Klemmverbindung verwendete Bereich zwei annähernd v-förmige Nuten aufweist, deren äußere Begrenzungen einen Abstand von beispielsweise 14,5 mm bei ca. einem Drittel ihrer Höhe aufweisen. Hierdurch wird bei einem Verschrauben des Platinenrohrs 1 mit dem Dom 6 eine Klemmung der beiden unteren Schenkel des Platinenrohrs 1 von außen erreicht.

## Patentansprüche

1. Scheibenwischvorrichtung für ein Kraftfahrzeug mit mindestens einem Platinenrohr (1) zur Aufnahme einer Antriebseinheit (2) der Scheibenwischervorrichtung, wobeidas Platinenrohr (1) mindestens abschnittsweise in der Weise ausgebildet ist, dass die Antriebseinheit (2) mittels einer Klemmverbindung unmittelbar mit dem Platinenrohr (1) verbunden werden kann, wobei
das Platinenrohr (1) mindestens abschnittweise als Profil mit zwei Schenkeln ausgebildet ist und die Antriebseinheit (2) mindestens einen Vorsprung (6) aufweist, der zwischen den Schenkeln des Profils einklemmbar ist,
wobei die zwei Schenkel des Pladnenrohrs (1) mindestens abschnittsweise mit einem definierten Öffnungswinkel ausgebildet sind und der mindestens eine Vorsprung (6) der Antriebseinheit als Dom mit einem definierten Kegelwinkel ausgebildet ist, wobei der Kegelwinkel des Doms größer ist als der Öffnungswinkel des U-Profils, **dadurch gekennzeichnet daß** das Platinenrohr (1) mindestens abschnittsweise als H-Profil ausgebildet ist.

2. Scheibenwischvorrichtung nach Anspruch 1, **dadurch gekennzeichnet,**
**dass** der Dom (6) ein Gewinde aufweist, in dem das Platinenrohr (1) verschraubt werden kann.

3. Scheibenwischvorrichtung nach einem der vorangehenden Ansprüche,
**dadurch gekennzeichnet, dass** an der Antriebseinheit (2) Positionierstifte (7) zur relativen Positionierung der Antriebseinheit (2) zu dem Platinenrohr (1) mittels Bohrungen (5) in dem Platinenrohr (1) angeordnet sind.

4. Scheibenwischvorrichtung nach einem der vorhergehenden Ansprüche,
**dadurch gekennzeichnet, dass** die Vorsprünge (6) bzw. die Positionierstifte (7) an der Antriebseinheit (2) in einer Entformungsrichtung der Antriebseinheit (2) angeordnet sind.

5. Scheibenwischvorrichtung nach einem der Ansprüche 2-4, **dadurch gekennzeichnet, dass** die Klemmverbindung dadurch realisiert ist, dass die Positionierstifte (7) in die Bohrungen (5) des Platinenrohrs (1) geklemmt werden.

6. Scheibenwischvorrichtung nach einem der vorangehenden Ansprüche, **dadurch gekennzeichnet, dass** die Antriebseinheit (2) ein Getriebegehäuse (22) aufweist, an dem der mindestens eine Vorsprung (6) angeordnet ist.

## Claims

1. Windscreen wiper device for a motor vehicle with at least one tubular plate (1) for receiving a drive unit (2) of the windscreen wiper device, wherein the tubular plate (1) is at least partially designed in such a manner that the drive unit (2) can be directly connected to the tubular plate (1) by means of a clamping connection, wherein the tubular plate (1) is at least partially designed as a profile having two limbs, and the drive unit (2) has at least one projection (6) which is clampable between the limbs of the profile, wherein the two limbs of the tubular plate (1) are at least partially designed with a defined opening angle, and the at least one projection (6) of the drive unit is designed as a dome with a defined angle of taper, wherein the angle of taper of the dome is greater than the opening angle of the U profile, **characterized in that** the tubular plate (1) is at least partially designed as an H profile.

2. Windscreen wiper device according to Claim 1, **characterized in that** the dome (6) has a thread in which the tubular plate (1) can be screwed.

3. Windscreen wiper device according to either of the preceding claims, **characterized in that** positioning pins (7) for the relative positioning of the drive unit (2) with respect to the tubular plate (1) by means of bores (5) in the tubular plate (1) are arranged on the drive unit (2).

4. Windscreen wiper device according to one of the preceding claims, **characterized in that** the projections (6) and the positioning pins (7) on the drive unit (2) are arranged in a demoulding direction of the drive unit (2).

5. Windscreen wiper device according to one of Claims 2-4, **characterized in that** the clamping connection is realized by the positioning pins (7) being clamped in the bores (5) of the tubular plate (1).

6. Windscreen wiper device according to one of the preceding claims, **characterized in that** the drive unit (2) has a gearing housing (22) on which the at least one projection (6) is arranged.

## Revendications

1. Dispositif d'essuie-glace pour un véhicule automobile, comprenant au moins un tube formant plaque de support (1) pour recevoir une unité d'entraînement (2) du dispositif d'essuie-glace, le tube formant plaque de support (1) étant réalisé en partie de telle sorte que l'unité d'entraînement (2) puisse être connectée directement au tube formant plaque de support (1) par le biais d'une connexion par serrage, le tube formant plaque de support (1) étant réalisé au moins en partie sous forme de profilé à deux branches et l'unité d'entraînement (2) présentant au moins une saillie (6) qui peut être serrée entre les branches du profilé, les deux branches du tube formant plaque de support (1) étant réalisées au moins en partie avec un angle d'ouverture défini et l'au moins une saillie (6) de l'unité d'entraînement étant réalisée sous forme de dôme avec un angle de conicité défini, l'angle de conicité du dôme étant supérieur à l'angle d'ouverture du profilé en U, **caractérisé en ce que** le tube formant plaque de support (1) est réalisé au moins en partie sous forme de profilé en H.

2. Dispositif d'essuie-glace selon la revendication 1, **caractérisé en ce que** le dôme (6) présente un filetage dans lequel le tube formant plaque de support (1) peut être vissé.

3. Dispositif d'essuie-glace selon l'une quelconque des revendications précédentes, **caractérisé en ce que**, sur l'unité d'entraînement (2), sont disposées des goupilles de positionnement (7) pour le positionnement relatif de l'unité d'entraînement (2) par rapport au tube formant plaque de support (1) au moyen d'alésages (5) dans le tube formant plaque de support (1).

4. Dispositif d'essuie-glace selon l'une quelconque des revendications précédentes, **caractérisé en ce que** les saillies (6) ou les goupilles de positionnement (7) sont disposées sur l'unité d'entraînement (2) dans une direction de démoulage de l'unité d'entraînement (2).

5. Dispositif d'essuie-glace selon l'une quelconque des revendications 2 à 4, **caractérisé en ce que** la connexion par serrage est réalisée par le fait que les goupilles de positionnement (7) sont serrées dans les alésages (5) du tube formant plaque de support (1).

6. Dispositif d'essuie-glace selon l'une quelconque des revendications précédentes, **caractérisé en ce que** l'unité d'entraînement (2) présente un boîtier de transmission (22) sur lequel est disposée l'au moins une saillie (6).
